# FASCICULE DE BREVET EUROPEEN

(11) **EP 3 274 073 B1**
(45) Date de publication et mention de la délivrance du brevet: **14.10.2020**
(21) Numéro de dépôt: 16718405.0
(22) Date de dépôt: 24.03.2016
(51) Int. Cl.: B01D 53/047

(54) **PROCÉDÉ DE PRODUCTION D'OXYGÈNE PAR VPSA**
VERFAHREN ZUR HERSTELLUNG VON SAUERSTOFF DURCH VPSA
METHOD FOR PRODUCING OXYGEN BY VPSA

(30) Priorité: 26.03.2015 FR 1552551
(43) Date de publication de la demande: 31.01.2018
(73) Titulaire: L'Air Liquide Société Anonyme pour l'Etude et l'Exploitation des Procédés Georges Claude, 75007 Paris (FR)
(72) Inventeur: MONEREAU, Christian, 34000 Montpellier (FR); PEREZ, Maxime, 02810 BUSSIARES (FR); RODRIGUES, Guillaume, 94420 Le Plessis Trevise (FR); TOULEMONDE, Louis, 59500 Douai (FR)
(74) Mandataire: Laigneau, Amandine
(86) Numéro de dépôt international: PCT/FR2016/050651
(87) Numéro de publication internationale: WO 2016/151253

(56) Documents cités:
- EP-A1- 0 350 373
- EP-A1- 0 758 625
- EP-A1- 0 948 989
- FR-A1- 2 647 431
- US-A- 5 223 004

## Description

La présente invention est relative à un procédé de production d'oxygène par adsorption d'un flux d'air atmosphérique mettant en œuvre une unité de type VPSA.

La production d'oxygène à partir d'air atmosphérique par des unités de type PSA a connu un important développement au cours de ces dernières décennies. Les améliorations ont porté sur les adsorbants, la technologie et le procédé lui-même.

Concernant les adsorbants, les unités les plus performantes utilisent à présent au sein d'un même adsorbeur une première couche destinée à arrêter l'humidité de l'air et au moins partiellement le dioxyde de carbone. Il va s'agir généralement d'alumine activée ou d'alumine activée dopée qui favorise l'adsorption du CO2. En cas d'air particulièrement pollué, une partie au moins de l'alumine activée peut être remplacée par du gel de silice plus résistant.

L'arrêt de l'azote s'effectue préférentiellement sur une zéolite du type LiLSX avec éventuellement une pré couche de zéolite de type X pour arrêter le CO2 résiduel et commencer à adsorber l'azote. Plusieurs types de LiLSX, plus ou moins échangées au lithium par exemple et optimisées en fonction de la pression partielle d'azote à l'intérieur du lit, peuvent être utilisées en couches successives. Préférentiellement, dans la zone saturée en azote en fin de phase de production, on favorisera un adsorbant avec une capacité d'adsorption élevée alors que dans la zone de transfert de masse, on favorisera un adsorbant avec une constante de Henry élevée, tout en prenant en compte les effets thermiques correspondants à ces choix.

Les diamètres (ou diamètres équivalents en cas d'adsorbant sous forme de bâtonnet) sont généralement compris entre 0.5 et 2 mm. La dimension retenue est fonction de la durée du cycle mis en jeu et est un compromis entre cinétique et pertes de charge.

Le procédé proposé ici est basé à priori sur l'utilisation des adsorbants cités ci-dessus mais n'est pas limité à leur emploi. En particulier dans le cas d'unités mettant en œuvre des temps de cycle courts, inférieur à 15 secondes par exemple, ou un grand nombre d'adsorbeurs, par exemple 6 ou plus, il pourra être nécessaire de mettre en œuvre des adsorbants structurés (contacteurs à passages parallèle, monolithe...) afin d'éviter les risques d'attrition, de fluidisation et des pertes de charge trop importantes.

Les progrès technologiques ont été très nombreux. Ils ont concerné les vannes maintenant plus rapides, plus fiables, plus étanches vis-à-vis de l'atmosphère..., les machines, compresseurs d'air et pompes à vide spécialement adaptées par les constructeurs aux paramètres opératoires des unités de production d'oxygène , l'entraînement par moteur à vitesse variable, le contrôle-commande plus précis, plus performant et plus rapide. Divers types d'adsorbeurs sont utilisés selon les débits mis en jeu ou les conditions économiques locales : adsorbeur cylindrique à axe vertical parfois utilisé en parallèle jusqu'à former un ensemble pouvant aller par exemple jusqu'à 8 unités semblables pour des débits plus élevés (on parle alors de groupe ou de grappes), adsorbeur cylindrique à axe horizontal, adsorbeur radial. Plusieurs systèmes pour maintenir l'adsorbant en place et éviter attrition ou fluidisation ont été employés (surpoids avec des billes de céramique ou d'acier, membrane, ballon, ressort...). On peut ranger également dans ce domaine, la gestion des effets thermiques avec un contrôle de la capacité thermique des lits d'adsorbant par adjonction de matériaux inertes tels des matériaux à changement de phase (MCP). Ces types de développements donnés de façon non exhaustive peuvent être appliqués dans le cadre de l'invention sans que cela puisse être considéré comme une amélioration de ce qui est proposé ici.

Le dernier grand domaine d'amélioration est le procédé lui-même. Par "procédé", on entend ici à la fois l'enchaînement des étapes que va suivre un adsorbeur au cours de son fonctionnement, et les caractéristiques de chacune de ces étapes : durée, quantité de gaz transféré, pression, température...

De façon générale, on désigne par les termes PSA tout procédé d'épuration ou de séparation de gaz mettant en œuvre une variation cyclique de la pression que voit l'adsorbant entre une pression haute, dite pression d'adsorption, et une pression basse, dite pression de régénération. Ainsi, cette appellation générique de PSA est employée indifféremment pour désigner les procédés cycliques suivants, auxquels il est aussi courant de donner des noms plus spécifiques en fonction des niveaux de pression mis en jeu ou du temps nécessaire à un adsorbeur pour revenir à son point initial (temps de cycle):
- Les procédés VSA dans lesquels l'adsorption s'effectue sensiblement à la pression atmosphérique, préférentiellement entre 0.95 et 1.25 bar abs et la pression de désorption est inférieure à la pression atmosphérique, typiquement de 50 à 400 mbar abs ;
- Les procédés MPSA ou VPSA dans lesquels l'adsorption s'effectue à une pression haute supérieure à la pression atmosphérique, typiquement entre 1.5 et 6 bar abs, et la désorption à une pression basse inférieure à la pression atmosphérique, généralement comprise entre 200 et 600 mbar abs ;
- Les procédés PSA proprement dits dans lesquels la pression haute est sensiblement supérieure à la pression atmosphérique, typiquement entre 3 et 50 bar abs et la pression basse sensiblement égale ou supérieure à la pression atmosphérique, généralement entre 1 et 9 bar abs ;
- Les procédés RPSA (Rapid PSA) pour lesquels la durée du cycle de pression est typiquement inférieure à la minute ;
- Les procédés URPSA (Ultra Rapid PSA) pour lesquels la durée du cycle de pression est de l'ordre de quelques secondes maximum.

Il convient de noter que ces diverses appellations ne sont pas standardisées et que les limites sont sujettes à variation selon les auteurs.

Avec les définitions précédentes, l'invention concerne aussi bien les procédés VSA que les procédés VPSA. Actuellement, compte tenu des temps de cycle utilisés, il s'agit également de procédé RPSA et éventuellement dans le futur de procédé URPSA. Afin de simplifier le texte, nous nous limiterons désormais au terme VPSA pour englober le domaine d'application de l'invention tel qu'on vient de le définir.

Quel que soit le type de PSA, un adsorbeur va commencer une période d'adsorption jusqu'à ce qu'il soit chargé dans le ou les constituants à arrêter à la pression haute puis va être régénéré par dépressurisation et extraction des composés adsorbés avant d'être remis en état, en pratique repressurisé, pour recommencer une nouvelle période d'adsorption. L'adsorbeur a alors effectué un "cycle de pression" et le principe même du procédé PSA est d'enchaîner ces cycles les uns après les autres; il s'agit donc d'un procédé cyclique. Le temps que met un adsorbeur pour revenir dans son état initial est appelé temps de cycle. Par principe, chaque adsorbeur suit le même cycle avec un décalage temporel qu'on appelle temps de phase ou plus simplement phase. On a donc la relation :
Temps de phase = temps de cycle / Nombre d'adsorbeurs, et on voit que le nombre de phases est égal au nombre d'adsorbeurs.

Il existe des unités ne comportant qu'un seul adsorbeur alors que des unités telles par exemple les PSA H2 comportent fréquemment de 10 à 16 adsorbeurs.

Un cycle comporte généralement des périodes de :
- Production ou Adsorption au cours de laquelle le gaz d'alimentation est introduit par une des extrémités de l'adsorbeur, les composés les plus adsorbables sont adsorbés préférentiellement et le gaz enrichi en les composés les moins adsorbables (gaz produit) est extrait par la seconde extrémité. L'adsorption peut se faire à pression montante, à pression sensiblement constante, voire à pression légèrement descendante ;
- Dépressurisation au cours de laquelle l'adsorbeur qui n'est plus alimenté en gaz d'alimentation est évacué par au moins une de ses extrémités d'une partie des composés contenus dans l'adsorbant et les volumes libres. En prenant comme référence le sens de circulation du fluide en période d'adsorption, on peut définir des dépressurisations à co-courant, à contre-courant ou simultanément à co et contre-courant ;
- Elution ou Purge au cours de laquelle un gaz enrichi en les constituants les moins adsorbables (gaz de purge) circule à travers le lit d'adsorbant afin d'aider à la désorption des composés les plus adsorbables. La Purge se fait généralement à contre-courant ;
- Repressurisation au cours de laquelle l'adsorbeur est au moins partiellement repressurisé avant de reprendre une période d'Adsorption. La repressurisation peut se faire à contre-courant et/ou à co-courant, avec des flux divers (alimentation, production, flux internes à l'unité) ;
- Temps mort au cours de laquelle l'adsorbeur reste dans le même état. Ces temps morts peuvent faire partie intégrale du cycle, permettant la synchronisation d'étapes entre adsorbeurs ou faire partie d'une étape qui s'est terminée avant le temps imparti. Les vannes peuvent être fermées ou rester en l'état selon les caractéristiques du cycle.

Dépressurisation et Repressurisation peuvent s'effectuer de différentes manières, surtout lorsque l'unité PSA comprend une pluralité d'adsorbeurs (ou de capacités). On est ainsi amené à définir des étapes élémentaires pour décrire plus exactement les transferts gazeux qui interviennent entre adsorbeurs (ou capacités) et avec le milieu extérieur (circuits d'alimentation, de gaz produit, de gaz résiduaire basse pression).

On connait du document EP0948989 A1, un adsorbeur d'un VPSA subissant une étape de repressurisation avec de l'oxygène.

Le nombre d'adsorbeurs est relativement indépendant de l'enchaînement des étapes choisi, c'est-à-dire du cycle. L'utilisation de plusieurs adsorbeurs permet d'utiliser directement un flux issu d'un premier adsorbeur dans un second adsorbeur pour peu que les étapes en question soit simultanées. Elle permet donc d'éviter l'emploi de capacités intermédiaires, de mieux profiter des gradients de pression. Cela peut permettre aussi d'optimiser le fonctionnement des machines, de rendre la production continue...

Comme on va le voir, il existe au moins à ce jour des unités VPSA comportant 1, 2, 3 ou 4 adsorbeurs. On peut également utiliser, en parallèle, 2 -ou plus- unités de ce type en mutualisant éventuellement quelques équipements (filtre d'air, silencieux, capacité de production... mis en commun).

Contrairement a beaucoup de procédés, dans le cas de la production d'oxygène, la matière première, c'est-à-dire l'air atmosphérique, est gratuite et la consommation énergétique de l'unité est un des postes prépondérant dans le coût de production de l'oxygène. De ce fait, le moindre gain sur l'énergie spécifique, à investissement constant, est intéressant car il impacte directement et sensiblement les coûts de production.

Cela se traduit dans les faits par l'existence d'un grand nombre de cycles ne différant souvent que par une gestion un peu différentes des flux entrant ou sortant ou par une adaptation un peu différente de l'arrangement des étapes au nombre d'adsorbeurs utilisés.

L'utilisation de programmes de simulation de plus en plus performants permet à présent d'explorer et de comparer un très grand nombre de variantes et l'augmentation progressive des débits en diminuant le coût relatif de l'investissement permet à coût raisonnable une plus grande complexité dans la gestion des flux.

De la même façon, l'amélioration de la cinétique de transfert de matière ou de chaleur liée soit au progrès sur les adsorbants (augmentation de la cinétique intrinsèque), soit à la possibilité d'utiliser des particules de moindre dimension liée aux développements relatif aux adsorbeurs (adsorbeur radial par exemple, monolithe...) permet de raccourcir la durée des cycles et par là la taille des adsorbeurs.

Pour toutes ces raisons (matière première gratuite, moindre poids de l'investissement), la consommation énergétique prend de plus en plus une importance prépondérante.

Partant de là, un problème qui se pose est de fournir un procédé amélioré présentant un cycle énergétiquement performant.

Une solution selon l'invention est un procédé de production d'oxygène par adsorption d'un flux d'air atmosphérique mettant en œuvre une unité de type VPSA comprenant au moins un adsorbeur, chaque adsorbeur étant soumis à un même cycle de pression comprenant les étapes suivantes :
a) production d'un premier flux gazeux riche en oxygène comprenant une teneur en oxygène T1 tout en chargeant en amont l'adsorbeur du flux d'air atmosphérique,
b) production d'un second flux gazeux riche en oxygène comprenant une teneur en oxygène T2 < T1,
c) production d'un troisième flux gazeux riche en oxygène comprenant une teneur en oxygène T3 < T2 < T1 avec extraction simultanée d'un flux résiduaire enrichi en azote,
d) élution de l'adsorbeur, duquel sont sortis les trois flux gazeux produits aux étapes a), b) et c), au moyen exclusivement du second flux gazeux produit à l'étape b),
e) repressurisation de l'adsorbeur ayant subi l'élution de l'étape d) avec successivement au moins deux flux, un premier et un deuxième flux de repressurisation, à teneur croissante en oxygène, le premier flux de repressurisation étant le troisième flux gazeux produit à l'étape c) et le deuxième flux de repressurisation étant le deuxième flux gazeux produit à l'étape b).

Le cycle de pression mis en œuvre dans le cadre de la présente invention est utilisable avec 1, 2, 3 et 4 adsorbeurs et plus généralement N adsorbeurs moyennant quelques aménagements tels l'adjonction de capacités pour le stockage temporaire de certains flux.

Selon le cas, le procédé selon l'invention peut présenter une ou plusieurs des caractéristiques suivantes :
- la production du second flux gazeux à l'étape b) s'effectue par dépressurisation à co-courant.
- la production du second flux gazeux à l'étape b) s'effectue en deux temps, un premier temps pendant lequel la production est réalisée par dépressurisation à co-courant et un deuxième temps pendant lequel la production est réalisée par une dépressurisation à co-courant combinée à une dépressurisation à contre-courant.
- la dépressurisation à contre-courant s'effectue au moyen d'une vanne.
- l'étape e) de repressurisation est effectuée avec successivement 3 flux, un premier, un deuxième et un troisième flux de repressurisation, à teneur croissante en oxygène, le premier flux de repressurisation étant le troisième flux gazeux produit à l'étape c), le deuxième flux de repressurisation étant le deuxième flux gazeux produit à l'étape b) et le troisième flux de repressurisation étant le premier flux gazeux produit à l'étape a).
- la pression à la fin de l'étape a) est comprise entre 1,75 et 1,25 bara, préférentiellement entre 1,55 et 1,45 bara, la pression à la fin de l'étape b) est comprise entre 1,5 et 1,0 bara, préférentiellement entre 1,30 et 1,20, la pression à la fin de l'étape c) est comprise entre 1,0 et 0,7 bara, préférentiellement entre 0,90 et 0,80, et la pression basse du cycle de pression est comprise entre 0,25 et 0,45 bara, préférentiellement entre 0,40 et 0,30.
- la durée du cycle de pression est inférieure à 60 secondes, préférentiellement comprise entre 15 et 45 secondes.
- l'unité de type VPSA comprend N adsorbeurs ou N groupes d'adsorbeurs avec chaque adsorbeur n ou chaque groupe d'adsorbeurs n suivant le cycle de pression avec un décalage d'un temps de phase par rapport au cycle de pression de l'adsorbeur n-1 avec n ≤ N.
- N est compris entre 1 et 4.

La solution proposée ici est plus simple que les solutions de l'art antérieur car elle ne conduit qu'à la production de trois flux de pureté décroissante et en outre elle diffère quant à l'utilisation de ces flux dans le cycle. L'élution s'effectue en totalité avec une partie du flux produit à l'étape b) alors que la repressurisation s'effectue en utilisant successivement les flux produits de pureté croissante.

Le cycle proposé dans le cadre de la présente invention est donc caractérisé par les séquences i, i + 1, i + 2 au cours desquelles l'unité produit 3 flux successifs riches en oxygène et de pureté décroissante. L'étape i correspond à l'étape a) et donc à la production proprement dite avec une pureté moyenne T1 qui correspond généralement à la spécification demandée par le Client, mettons à titre d'exemple 93% volume O2. Au cours de cette étape l'adsorbeur est alimenté en air via une unité de compression d'air (C-air).

L'étape référencée i + 1 correspond à l'étape b) et donc à la production d'un second flux riche en oxygène mais de pureté moyenne T2 inférieure à la précédente, mettons à titre d'exemple 91% volume O2. Cette fraction peut être produite avec ou sans introduction d'air à l'autre extrémité de l'adsorbeur. Plus précisément, l'adsorbeur peut-être isolé côté air et la fraction d'oxygène est produite par décompression à co-courant, ou de l'air peut-être introduit pendant seulement une fraction de cette étape ou pendant toute la durée de l'étape, à débit nominal ou réduit. On peut aussi soutirer simultanément, pendant la totalité ou une partie seulement de l'étape, par dépressurisation à contre-courant un flux riche en azote.

L'étape référencée i+2 correspond à l'étape c) et donc à la production d'un troisième flux riche en oxygène de pureté moyenne T3 inférieure à la précédente, mettons à 89% volume O2. Ce flux est obtenu par une décompression à co-courant simultanée avec une décompression à contre-courant destinée à extraire simultanément de l'adsorbeur un flux riche en azote. Suivant le niveau de pression, cette décompression à contre-courant peut se faire via une vanne et/ou via une pompe à vide. En pratique, il s'agira au moins en fin d'étape d'un pompage sous vide et on a adopté par simplification la représentation [PAV] pour signifier ces différentes possibilités, PAV étant mis pour "pompage sous vide", et la présence de crochets signifiant que l'étape de pompage sous vide n'est pas obligatoire.

La gestion dans le cycle de ces différentes fractions oxygène produites est caractérisé par l'enchaînement des séquences suivantes :
L'étape j correspond à une étape de simple pompage sous vide pour extraire de l'azote. Le côté production de l'adsorbeur est isolé.

L'étape j+1 correspond à une étape d'élution avec pompage. On introduit un gaz riche en oxygène côté production simultanément au pompage. La présence d'oxygène facilite la désorption de l'azote.

Les étapes j+2, j+3 et j+4 sont des étapes de repressurisation de l'adsorbeur.

L'élution de l'étape j+1 se fait uniquement avec le gaz issu de l'étape b), correspondant à l'étape i+1 qu'on a défini précédemment.

La repressurisation se fait quand à elle par étapes successives avec des flux de pureté croissante en oxygène : un premier flux de repressurisation qui est le troisième flux gazeux produit à l'étape c), un deuxième flux de repressurisation qui est le deuxième flux gazeux produit à l'étape b) et éventuellement un troisième flux de repressurisation qui est le premier flux gazeux produit à l'étape a). Suivant les conditions opératoires, l'apport de la troisième repressurisation peut être faible et pourra être évité par simplification. C'est ce que signifie ici la présence de crochets : [T1].

Il existe plusieurs manières de représenter de façon synthétique les cycles d'unité de type PSA.

Nous allons utiliser ici la méthode des tableaux dans laquelle chaque étape élémentaire figure dans une case. On peut définir le cycle en décrivant la totalité des étapes que fait un adsorbeur pendant un cycle. Préférentiellement, on fait figurer l'une sous l'autre la description des différentes phases que suivent simultanément les différents adsorbeurs. Si l'on veut être exhaustif, on décrit le fonctionnement de chaque adsorbeur l'un sous l'autre. Chaque case définit une étape par un intitulé abrégé (Prod, Eq, Purge...). Cette représentation est très compacte et très pratique. Dès lors qu'un flux entrant ou sortant à plusieurs utilisations, cette méthode perd cependant en clarté car il devient difficile de définir simplement l'étape correspondante. Cela reste néanmoins la méthode la plus utilisée actuellement.

On a utilisé ici une méthode intermédiaire en forme de tableau où pour chaque étape on définit les flux entrant et sortant de l'adsorbeur. Cette méthode a déjà été utilisée sous une forme un peu différente. Ainsi par exemple :

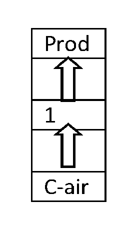

signifie que l'adsorbeur est dans l'étape 1, qu'il reçoit comme alimentation un flux issu d'un compresseur (c-air), ce flux étant dans le cadre de l'invention de l'air atmosphérique. Le flux correspondant à la production (Prod) sort à l'extrémité opposée de l'adsorbeur.

| |
|---|
| X |
| X |
| J |
| 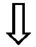 |
| PAV |

signifie que l'étape j est une étape de simple mise sous vide via une pompe à vide reliée à l'extrémité d'alimentation pendant que le côté production est fermé (X).

On laisse les deux cases du haut ou du bas vide, si ce qu'il se passe respectivement côté production ou côté alimentation n'est pas formellement défini ou n'est pas à définir à ce moment pour une bonne compréhension du cycle , c'est-à-dire par exemple que le fait qu'il y ait une extraction, une injection de gaz ou que l'extrémité soit isolé ne soit pas caractéristique de l'étape en question et que tous les cas, voire leur combinaison, par exemple une injection suivie d'une extraction, soient possibles.

La famille de cycles relative à la présente invention peut alors se caractériser par le tableau suivant, les colonnes laissées libres signifiant qu'outre les 8 étapes décrites, il peut y avoir des étapes additionnelles comme celles correspondant à un changement de pompe à vide, une repressurisation finale simplement à l'air....

| | T1 (Prod) | T2 | T3 | | X | T2 | T3 | T2 | [T1] [Prod] |
|---|---|---|---|---|---|---|---|---|---|
| | 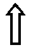 | 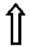 | 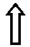 | | X | 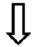 | 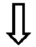 | 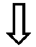 | 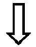 |
| | **i** | **I+1** | **I+2** | | **J** | **J+1** | **J+2** | **J+3** | **J+4** |
| | 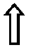 | | 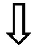 | | 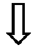 | 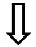 | | | |

| | | | | | | | | | |
|---|---|---|---|---|---|---|---|---|---|
| | C-air | | [PAV] | | PAV | PAV | | | |

Selon un mode de réalisation, la production d'un second flux gazeux riche en oxygène selon l'étape b) se fait par simple dépressurisation à co-courant, correspondant aux étapes caractéristiques suivantes :

| | T1 (Prod) | T2 | T3 | | X | T2 | T3 | T2 | [T1] [Prod] |
|---|---|---|---|---|---|---|---|---|---|
| | 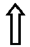 | 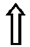 | 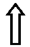 | | X | 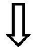 | 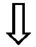 | 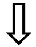 | 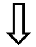 |
| | **i** | **I+1** | **I+2** | | **J** | **J+1** | **J+2** | **J+3** | **J+4** |
| | 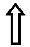 | X | 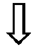 | | 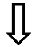 | 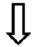 | | | |
| | C-air | X | PAV | | PAV | PAV | | | |

Selon un autre mode de réalisation, la production du second flux gazeux riche en oxygène selon l'étape b) se fait en deux sous étapes, d'abord par simple dépressurisation à co-courant, puis toujours par dépressurisation à co-courant mais simultanément avec une dépressurisation à contre-courant, préférentiellement vers l'atmosphère via une vanne. Ce dernier fonctionnement correspond aux sous étapes caractéristiques suivantes k-a et k-b concernant la production du flux de pureté Pur2, sous étapes qui se substituent à l'étape i+1 dans le tableau ci-dessus.

| T2 | |
|---|---|
| 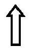 | 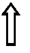 |
| **k-a** | **k-b** |
| X | 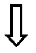 |
| X | ATM |

Selon un mode de réalisation non représentatif de l'invention, la repressurisation initiale de l'adsorbeur avec le troisième flux gazeux produit à l'étape c) s'effectue simultanément avec l'introduction d'air à co-courant côté alimentation pendant tout ou partie de cette étape. L'adsorbeur étant sous vide, cette introduction d'air peut se faire directement à partir de l'atmosphère via une vanne. Il peut s'agir d'une vanne tout ou rien ou d'une vanne dont l'ouverture évolue tout au long de l'étape. L'ouverture peut ne s'effectuer qu'en cours d'étape sur une temporisation ou un seuil de pression. Cette ouverture fait partie des paramètres à optimiser. Les logiciels de simulation les plus performants permettent de déterminer les tendances à respecter. Des réglages sur site peuvent permettre d'affiner les caractéristiques d'ouverture. N'étant pas obligé de passer par la pompe à vide et cette injection d'air pouvant être réduite voire nulle, on a adopté pour représenter ces possibilités de fonctionnement la représentation [ATM], d'où les étapes représentatives :

| | T1 (Prod) | T2 | T3 | | X | T2 | T3 | T2 | [T1] [Prod] |
|---|---|---|---|---|---|---|---|---|---|
| | 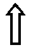 | 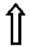 | 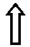 | | X | 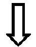 | 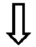 | 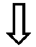 | 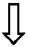 |
| | **i** | **I+1** | **I+2** | | **J** | **J+1** | **J+2** | **J+3** | **J+4** |
| | 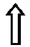 | X | 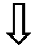 | | 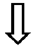 | 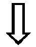 | 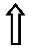 | | |
| | C-air | X | [PAV] | | PAV | PAV | [ATM] | | |

Selon un autre mode de réalisation préférentiel la repressurisation de l'adsorbeur avec le deuxième flux gazeux produit à l'étape b) s'effectue simultanément avec l'introduction d'air à co-courant côté alimentation pendant tout ou partie de cette étape et préférentiellement durant toute l'étape. L'adsorbeur étant sous vide, l'essentiel de la repressurisation à l'air peut se faire directement à partir de l'atmosphère via une vanne. Il peut s'agir d'une vanne tout ou rien ou d'une vanne dont l'ouverture évolue tout au long de l'étape. L'ouverture peut ne s'effectuer qu'en cours d'étape sur une temporisation ou un seuil de pression. Cette ouverture fait partie des paramètres à optimiser. Comme dit précédemment, l'air est préférentiellement introduit tout au long de cette étape et la représentation correspondante est alors la suivante :

| | T1 (Prod) | T2 | T3 | | X | T2 | T3 | T2 | [T1] [Prod] |
|---|---|---|---|---|---|---|---|---|---|
| | 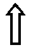 | 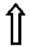 | 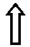 | | X | 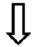 | 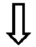 | 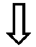 | 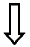 |
| | **i** | **I+1** | **I+2** | | **J** | **J+1** | **J+2** | **J+3** | **J+4** |
| | 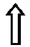 | X | 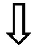 | | 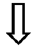 | 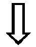 | 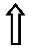 | 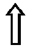 | |
| | C-air | X | [PAV] | | PAV | PAV | [ATM] | ATM | |

Selon une variante non représentative de l'invention, la repressurisation de l'adsorbeur avec le troisième flux gazeux produit à l'étape a) s'effectue simultanément avec l'introduction d'air à co-courant côté alimentation. Compte tenu du cycle de pression, cette repressurisation éventuelle se déroule autour de la pression atmosphérique ou en totalité en dessus de la pression atmosphérique. Il est alors nécessaire d'utiliser un moyen de compression (C-air) pour introduire l'air atmosphérique dans l'adsorbeur.

| | T1 (Prod) | T2 | T3 | | X | T2 | T3 | T2 | T1 (Prod) |
|---|---|---|---|---|---|---|---|---|---|
| | 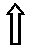 | 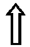 | 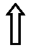 | | X | 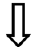 | 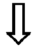 | 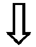 | 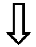 |
| | **i** | **I+1** | **I+2** | | **J** | **J+1** | **J+2** | **J+3** | **J+4** |
| | 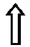 | X | 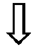 | | 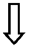 | 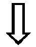 | 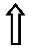 | 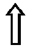 | 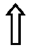 |
| | C-air | X | [PAV] | | PAV | PAV | [ATM] | ATM | C-air |

La production d'oxygène (étape i) suit alors immédiatement la repressurisation par le flux riche en oxygène (étape j+4). En pratique, il peut juste y avoir une inversion du sens de circulation de l'oxygène quand la pression dans l'adsorbeur dépasse la pression du circuit oxygène.

Selon un mode de réalisation préférentiel, le cycle comprend en outre une repressurisation finale de l'adsorbeur avec uniquement introduction d'air côté alimentation. Cette étape précède alors l'étape de production d'oxygène à la pureté T1. La durée de cette étape est déterminée par temporisation ou par un seuil de pression. L'air est introduit à partir du compresseur d'air C-air car l'adsorbeur est à une pression supérieure à la pression atmosphérique au moins en fin d'étape. Cette étape se place après l'étape de repressurisation utilisant le flux de pureté T2 ou après l'étape éventuelle de repressurisation avec du gaz de pureté T1, issu de la production.

On obtient alors respectivement les deux variantes suivantes :

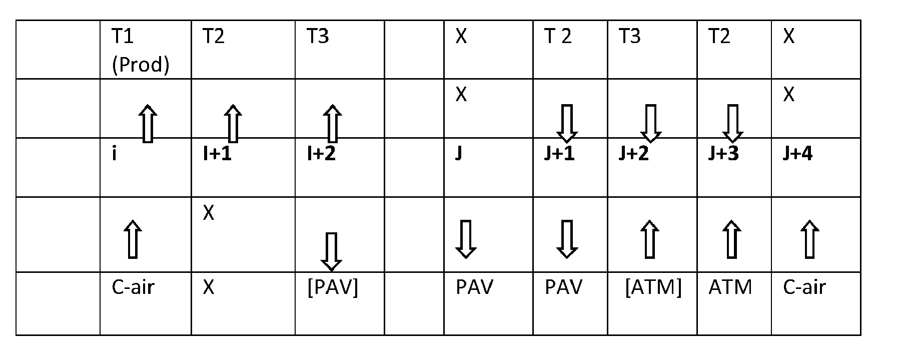

Et

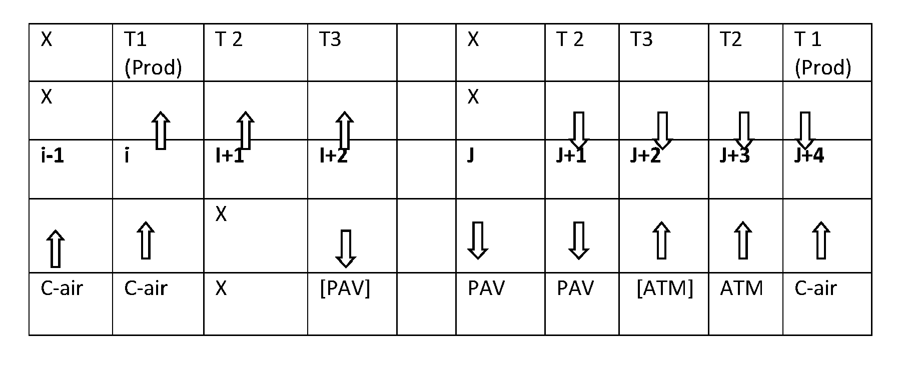

Le choix de la pression haute du cycle, tout en restant dans une plage relativement restreinte de pressions, peut dépendre de l'utilisation qui est faite de l'oxygène. S'il est possible d'utiliser la production directement, c'est-à-dire sans l'adjonction d'une machine de compression, on fera en sorte de disposer de l'oxygène à la bonne pression. Sinon, c'est par une optimisation unité VSA 02 / moyen de compression O2 que l'on déterminera la meilleure pression qui restera généralement dans la plage allant de 1.25 à 1.75 bara. Le choix de la pression basse, toujours dans une plage de pression limitée, va être fonction à la fois du choix de la (ou des)machine de pompage et de l'optimisation économique investissement / énergie. Une pression un peu plus basse tend à diminuer le volume d'adsorbant à mettre en jeu mais c'est au détriment de la consommation énergétique. La plage envisagée dans le cadre de l'invention va de 0.25 à 0.45 bara.

Les pressions intermédiaires entre les haute et basse pressions sont déterminées par optimisation, une fois le cycle de pression et l'enchaînement des étapes retenus.

Ainsi, selon un mode de réalisation retenu entrant dans le cadre de l'invention, la pression de fin d'étape a) est comprise entre 1.25 et 1.75 bara, la pression de fin d'étape b) est comprise entre 1.5 et 1.0 bara, la pression de fin d'étape c) est comprise entre 1.0 et 0.7 bara et la pression basse du cycle est comprise entre 0.25 et 0.45 bara

Selon un mode de réalisation préférentiel, la pression de fin d'étape a) est voisine de 1.5 bara, la pression de fin d'étape b) est voisine de 1.25 bara, la pression de fin d'étape c) est voisine de 0.85 bara et en ce que la pression basse du cycle est voisine de 0.35 bara.

Par voisine, on entend à plus ou moins 50 mbars et préférentiellement à plus ou moins 25 mbars.

Comme on l'a dit précédemment, on peut effectuer ce cycle avec a priori un nombre quelconque d'adsorbeurs mais les unités les plus adaptées comporteront 1, 2, 3 ou 4 adsorbeurs.

Selon un mode de réalisation, l'unité VPSA comporte donc 1 adsorbeur qui suit le cycle ci-dessous à 8 étapes :

| T1 (Prod) | T2 | T3 | X | T2 | T3 | T2 | [T1] [Prod] |
|---|---|---|---|---|---|---|---|
| 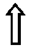 | 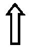 | 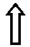 | X | 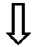 | 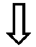 | 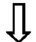 | 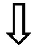 |
| **1(i)** | **2 (i+1)** | **3 (i+2)** | **4 (J)** | **5 (J+1)** | **6 (J+2)** | **7 (J+3)** | **8 (J+4)** |
| 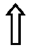 | X | 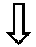 | 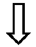 | 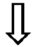 | 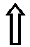 | 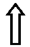 | 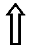 |
| C-air | X | PAV | PAV | PAV | [ATM] | ATM | C-air |

Préférentiellement, l'étape b) c'est-à-dire 2 dans le tableau ci-dessus comprendra un premier temps 2-i pendant lequel la production est réalisée par dépressurisation à co-courant et un deuxième temps 2-ii pendant lequel la production est réalisée par une dépressurisation à co-courant combinée à une dépressurisation à contre-courant.

Le cycle correspondant peut se représenter comme suit :

| T1 (Prod) | T2 | | T3 | X | T2 | T3 | T2 | X |
|---|---|---|---|---|---|---|---|---|
| 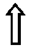 | 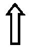 | 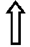 | 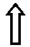 | X | 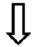 | 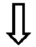 | 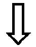 | X |
| **1(i)** | **2-i (i+1)** | **2-ii (i+1)** | **3 (i+2)** | **4 (J)** | **5 (J+1)** | **6 (J+2)** | **7 (J+3)** | **8 (i-1)** |
| 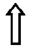 | X | 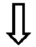 | 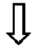 | 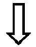 | 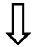 | 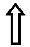 | 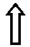 | 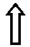 |
| C-air | X | ATM | PAV | PAV | PAV | ATM | ATM | C-air |

Ce cycle, comme le précédent comporte 3 capacités tampons, correspondant à chacune des puretés.

Ce cycle se différencie très sensiblement des autres cycles proposés pour une unité à un seul adsorbeur. Le document US 6, 132,496 en particulier décrit une unité à un adsorbeur, une machine unique faisant office de compresseur et pompe à vide et à 3 capacités comme les cycles selon la présente invention. L'élution se fait dans les deux cas par le gaz de seconde pureté T2 mais la repressurisation côté oxygène se fait exclusivement avec du gaz issu de la production T1 ; il n'y a ni gaz de 3^{ème} pureté, ni repressurisation progressive avec des gaz de pureté croissante. Tous les autres cycles de type mono-adsorbeur fonctionne a priori avec une ou deux capacités tampon seulement et mettent donc en œuvre des flux différents.

Selon un autre mode de réalisation, l'unité VPSA comporte 2 adsorbeurs.

Pour simplifier le suivi du cycle, on a choisi comme première étape le début de la repressurisation. On pourrait néanmoins commencer par une autre étape sans en changer le principe.

Dans le même esprit, chaque phase comprend le même nombre d'étapes, ici 5. Ceci n'est pas une obligation et par exemple, les étapes 7 et 8 d'une part et 9 et 10 d'autre part, pourraient être regroupées en une seule.

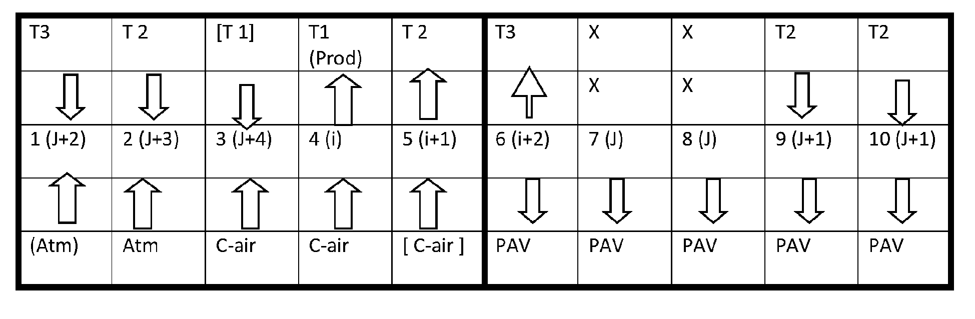

L'unité comporte un compresseur d'air qui peut être en fonctionnement continu (étapes 1 à 5) ou discontinu.

La pompe à vide est en fonctionnement continu (étapes 6 à 10).

Le cycle nécessite au moins 2 capacités tampons pour gérer les flux de production (T1) et de deuxième pureté (T2). Une partie des flux produits sera avantageusement utilisée simultanément, seulement la partie non utilisée étant stockée.

Le cycle préférentiel se caractérise par le fait qu'il n'y a pas introduction d'air pendant l'étape de production du flux d'oxygène de deuxième pureté ; comme expliqué précédemment, l'intérêt de l'introduction d'oxygène pendant l'étape de repressurisation finale (étape 3) va en partie dépendre du type d'adsorbeurs utilisés. Elle pourra être inutile pour un adsorbeur cylindrique à axe vertical (ou à une grappe d'adsorbeurs de ce type) présentant un faible volume mort oxygène et au contraire avoir un effet positif dans le cas d'un adsorbeur radial comportant un important volume mort oxygène, par exemple 30% du volume d'adsorbant.

Avec nos conventions, le cycle correspondant pour un tel adsorbeur se représente comme suit :

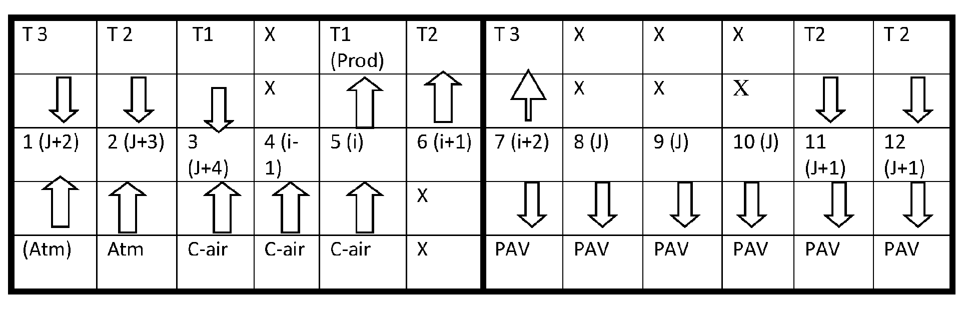

On rappelle qu'au cours de l'étape 1, la repressurisation avec le flux d'oxygène de pureté Pur3 peut s'accompagner d'une repressurisation à co-courant avec de l'air atmosphérique, repressurisation qui peut commencer en cours d'étape.

Selon un autre mode de réalisation, l'unité VPSA comporte 3 adsorbeurs.

Un cycle caractéristique de l'invention est représenté ci-dessous :

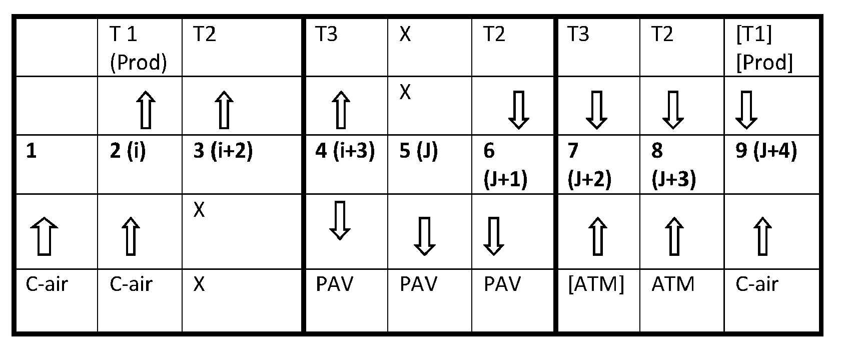

On a détaillé des cycles correspondant à 1, 2 et 3 adsorbeurs mais il est facile pour l'homme de l'art à partir des explications fournies d'adapter ce cycle à un nombre quelconque d'adsorbeurs, par exemple pour 6 adsorbeurs, à partir du dernier tableau en regroupant ainsi les étapes : 9+1/2/3+4/5/6/7+8, ce qui ne constitue qu'une des possibilités.

Pour les cycles comprenant 1 à 4 adsorbeurs des adsorbants particulaires (billes, bâtonnets, concassés) sont de préférence utilisés. Et pour les cycles comprenant plus de 4 adsorbeurs, des adsorbants structurés sont de préférence utilisés.

## Revendications

1. Procédé de production d'oxygène par adsorption d'un flux d'air atmosphérique mettant en œuvre une unité de type VPSA comprenant au moins un adsorbeur, chaque adsorbeur étant soumis à un même cycle de pression comprenant les étapes suivantes :
a) production d'un premier flux gazeux riche en oxygène, comprenant une teneur en oxygène T1 tout en chargeant en amont l'adsorbeur du flux d'air atmosphérique,
b) production d'un second flux gazeux riche en oxygène, comprenant une teneur en oxygène T2 < T1,
c) production d'un troisième flux gazeux riche en oxygène, comprenant une teneur en oxygène T3 < T2 < T1 avec extraction simultanée d'un flux résiduaire enrichi en azote,
d) élution de l'adsorbeur, duquel sont sortis les trois flux gazeux produits aux étapes a), b) et c), au moyen exclusivement du second flux gazeux produit à l'étape b),
e) repressurisation de l'adsorbeur ayant subi l'élution de l'étape d) avec successivement au moins deux flux, un premier et un deuxième flux de repressurisation, à teneur croissante en oxygène, le premier flux de repressurisation étant le troisième flux gazeux produit à l'étape c) et le deuxième flux de repressurisation étant le deuxième flux gazeux produit à l'étape b).

2. Procédé selon la revendication 1, **caractérisé en ce que** la production du second flux gazeux à l'étape b) s'effectue par dépressurisation à co-courant.

3. Procédé selon la revendication 1, **caractérisé en ce que** la production du second flux gazeux à l'étape b) s'effectue en deux temps, un premier temps pendant lequel la production est réalisée par dépressurisation à co-courant et un deuxième temps pendant lequel la production est réalisée par une dépressurisation à co-courant combinée à une dépressurisation à contre-courant.

4. Procédé selon la revendication 3, **caractérisé en ce que** la dépressurisation à contre-courant s'effectue au moyen d'une vanne.

5. Procédé selon l'une des revendications 1 à 4, **caractérisé en ce que** l'étape e) de repressurisation est effectuée avec successivement 3 flux, un premier, un deuxième et un troisième flux de repressurisation, à teneur croissante en oxygène, le premier flux de repressurisation étant le troisième flux gazeux produit à l'étape c), le deuxième flux de repressurisation étant le deuxième flux gazeux produit à l'étape b) et le troisième flux de repressurisation étant le premier flux gazeux produit à l'étape a).

6. Procédé selon l'une des revendications 1 à 5, **caractérisé en ce que** :
- la pression à la fin de l'étape a) est comprise entre 1,75 et 1,25 bar, préférentiellement entre 1,55 et 1,45 bara,
- la pression à la fin de l'étape b) est comprise entre 1,5 et 1,0 bara, préférentiellement entre 1,30 et 1,20,
- la pression à la fin de l'étape c) est comprise entre 1,0 et 0,7 bara, préférentiellement entre 0,90 et 0,80, et
- la pression basse du cycle de pression est comprise entre 0,25 et 0,45 bara, préférentiellement entre 0,40 et 0,30.

7. Procédé selon l'une des revendications 1 à 6, **caractérisé en ce que** la durée du cycle de pression est inférieure à 60 secondes, préférentiellement comprise entre 15 et 45 secondes.

8. Procédé selon l'une des revendications 1 à 7, **caractérisé en ce que** l'unité de type VPSA comprend N adsorbeurs ou N groupes d'adsorbeurs avec chaque adsorbeur n ou chaque groupe d'adsorbeurs n suivant le cycle de pression avec un décalage d'un temps de phase par rapport au cycle de pression de l'adsorbeur n-1 avec n ≤ N.

9. Procédé selon la revendication 8, **caractérisé en ce que** N est compris entre 1 et 4.

## Patentansprüche

1. Verfahren zur Produktion von Sauerstoff durch Adsorption einer atmosphärischen Luftströmung unter Einsatz einer Einheit vom VPSA-Typ, umfassend mindestens einen Adsorber, wobei jeder Adsorber einem gleichen Druckzyklus unterzogen wird, umfassend die folgenden Schritte:
a) Produktion einer ersten sauerstoffreichen gasförmigen Strömung, die einen Sauerstoffgehalt T1 umfasst, bei gleichzeitigem stromaufwärtigem Laden des Adsorbers mit der atmosphärischen Luftströmung,
b) Produktion einer zweiten sauerstoffreichen gasförmigen Strömung, die einen Sauerstoffgehalt T2 < T1 umfasst,
c) Produktion einer dritten sauerstoffreichen gasförmigen Strömung, die einen Sauerstoffgehalt T3 < T2 < T1 umfasst mit simultaner Extraktion einer mit Stickstoff angereicherten Restströmung,
d) Elution des Adsorbers, aus dem die drei gasförmigen Strömungen, die in den Schritten a), b) und c) produziert wurden, ausgetreten sind, mittels ausschließlich der zweiten gasförmigen Strömung, die im Schritt b) produziert wurde,
e) erneute Druckbeaufschlagung des Adsorbers, der der Elution des Schritts d) unterworfen wurde, mit aufeinanderfolgend mindestens zwei Strömungen, einer ersten und einer zweiten Strömung zur erneuten Druckbeaufschlagung, mit zunehmendem Sauerstoffgehalt, wobei die erste Strömung zur erneuten Druckbeaufschlagung die dritte gasförmige Strömung ist, die im Schritt c) produziert wurde, und die zweite Strömung zur erneuten Druckbeaufschlagung die zweite gasförmige Strömung ist, die im Schritt b) produziert wurde.

2. Verfahren nach Anspruch 1, **dadurch gekennzeichnet, dass** die Produktion der zweiten gasförmigen Strömung im Schritt b) durch Druckentlastung bei Gleichstrom erfolgt.

3. Verfahren nach Anspruch 1, **dadurch gekennzeichnet, dass** die Produktion der zweiten gasförmigen Strömung im Schritt b) in zwei Etappen erfolgt, einer ersten Etappe, bei der die Produktion durch Druckentlastung bei Gleichstrom erzielt wird, und einer zweiten Etappe, bei der die Produktion durch eine Druckentlastung bei Gleichstrom kombiniert mit einer Druckentlastung bei Gegenstrom erzielt wird.

4. Verfahren nach Anspruch 3, **dadurch gekennzeichnet, dass** die Druckentlastung bei Gegenstrom mithilfe eines Ventils erfolgt.

5. Verfahren nach einem der Ansprüche 1 bis 4, **dadurch gekennzeichnet, dass** der Schritt e) der erneuten Druckbeaufschlagung mit aufeinanderfolgend 3 Strömungen durchgeführt wird, einer ersten, einer zweiten und einer dritten Strömung zur erneuten Druckbeaufschlagung, mit zunehmendem Sauerstoffgehalt, wobei die erste Strömung zur erneuten Druckbeaufschlagung die dritte gasförmige Strömung ist, die im Schritt c) produziert wurde, die zweite Strömung zur erneuten Druckbeaufschlagung die zweite gasförmige Strömung ist, die im Schritt b) produziert wurde, und die dritte Strömung zur erneuten Druckbeaufschlagung die erste gasförmige Strömung ist, die im Schritt a) produziert wurde.

6. Verfahren nach einem der Ansprüche 1 bis 5, **dadurch gekennzeichnet, dass**:
- der Druck am Ende des Schritts a) zwischen 1,75 und 1,25 bar, vorzugsweise zwischen 1,55 und 1,45 bar abs enthalten ist,
- der Druck am Ende des Schritts b) zwischen 1,5 und 1,0 bar abs, vorzugsweise zwischen 1,30 und 1,20 enthalten ist,
- der Druck am Ende des Schritts c) zwischen 1,0 und 0,7 bar abs, vorzugsweise zwischen 0,90 und 0,80 enthalten ist, und
- der Niederdruck des Druckzyklus zwischen 0,25 und 0,45 bar abs, vorzugsweise zwischen 0,40 und 0,30 enthalten ist.

7. Verfahren nach einem der Ansprüche 1 bis 6, **dadurch gekennzeichnet, dass** die Dauer des Druckzyklus weniger als 60 Sekunden, vorzugsweise zwischen 15 und 45 Sekunden beträgt.

8. Verfahren nach einem der Ansprüche 1 bis 7, **dadurch gekennzeichnet, dass** die Einheit vom VPSA-Typ N Adsorber oder N Adsorbergruppen umfasst, wobei jeder Adsorber n oder jede Adsorbergruppe n dem Druckzyklus mit einer Verschiebung um einen Phasentakt in Bezug auf den Druckzyklus des Adsorbers n-1 mit n ≤ N folgt.

9. Verfahren nach Anspruch 8, **dadurch gekennzeichnet, dass** N zwischen 1 und 4 enthalten ist.

## Claims

1. Method for producing oxygen by adsorbing a stream of atmospheric air using a VPSA unit comprising at least one adsorber, each adsorber undergoing one single pressure cycle comprising the following steps:
a) producing a first stream of gas rich in oxygen, comprising an oxygen content T1 while loading the adsorber of the stream of atmospheric air upstream,
b) producing a second stream of gas rich in oxygen, comprising an oxygen content T2 < T1,
c) producing a third stream of gas rich in oxygen, comprising an oxygen content T3 < T2 < T1 while simultaneously extracting a nitrogen-enriched residual stream,
d) eluting the adsorber, from which the three streams of gas produced in steps a), b) and c) are taken, exclusively via the second stream of gas produced in step b),
e) repressuring the adsorber that underwent the elution of step d) consecutively with at least two streams, first and second repressuring streams, with increasing oxygen content, the first repressuring stream being the third stream of gas produced in step c) and the second repressuring stream being the second stream of gas produced in step b).

2. Method according to claim 1, **characterised in that** the production of the second stream of gas in step b) is carried out by depressurisation at co-current.

3. Method according to claim 1, **characterised in that** the production of the second stream of gas in step b) is carried out in two steps, a first step during which the production is carried out by depressurisation at co-current and a second step during which the production is carried out by a depressurisation at co-current combined with a depressurisation at counter-current.

4. Method according to claim 3, **characterised in that** the depressurisation at counter-current is carried out by means of a valve.

5. Method according to one of claims 1 to 4, **characterised in that** step e) of repressuring is carried out with successively 3 steams, a first, a second and a third repressuring stream, with increasing oxygen content, the first repressuring stream being the third stream of gas produced in step c), the second repressuring stream being the second stream of gas produced in step b) and the third repressuring stream being the first stream of gas produced in step a).

6. Method according to one of claims 1 to 5, **characterised in that**:
- the pressure at the end of step a) is comprised between 1.75 and 1.25 bar, preferably between 1.55 and 1.45 bara,
- the pressure at the end of step b) is comprised between 1.5 and 1.0 bara, preferably between 1.30 and 1.20,
- the pressure at the end of step c) is comprised between 1.0 and 0.7 bara, preferably between 0.90 and 0.80, and
- the low pressure of the pressure cycle is comprised between 0.25 and 0.45 bara, preferably between 0.40 and 0.30.

7. Method according to one of claims 1 to 6, **characterised in that** the duration of the pressure cycle is less than 60 seconds, preferably comprised between 15 and 45 seconds.

8. Method according to one of claims 1 to 7, **characterised in that** the unit of the VPSA type comprises N adsorbers or N groups of adsorbers with each adsorber n or each group of adsorbers n according to the pressure cycle with a phase time shift with respect to the pressure cycle of the adsorber n-1 with n ≤ N.

9. Method according to claim 8, **characterised in that** N is comprised between 1 and 4.
